# EUROPEAN PATENT SPECIFICATION

(11) **EP 3 121 573 B1**
(45) Date of publication and mention of the grant of the patent: **25.03.2020**
(21) Application number: 16182417.2
(22) Date of filing: 08.05.2008
(51) Int. Cl.: G01K 1/02, F24C 7/08, H05B 6/64

(54) **OVEN, IN PARTICULAR BAKING OVEN OR MICROWAVE OVEN**
OFEN, INSBESONDERE BACKOFEN ODER MIKROWELLENOFEN
FOUR, NOTAMMENT FOUR DE CUISSON OU FOUR À MICRO-ONDES

(43) Date of publication of application: 25.01.2017
(62) Divisional of application: 08008662.2
(73) Proprietor: Electrolux Home Products Corporation N.V., 1130 Brussels (BE)
(72) Inventor: HERZOG, Michael, 91541 Rothenburg ob der Tauber (DE); MÜNZBERG, Gerhard, 8758 Obstalden (CH); GUMMERSBACH, Mirko, 57462 Olpe (DE); HOFMANN, Arnd, 91541 Rothenburg ob der Tauber (DE); REINHARD-HERRSCHER, Fabienne, 91541 Rothenburg ob der Tauber (DE)
(74) Representative: Electrolux Group Patents

(56) References cited:
- GB-A- 2 119 127
- JP-A- 2001 317 741
- US-A- 4 377 733
- US-A1- 2006 254 432

## Description

The present invention relates to an oven, in particular baking oven or microwave oven, according to the preamble of claim 1, designed for active temperature treatment of a substance, the substance being fluid, solid or a mixture thereof.

Such an oven is described for example in DE 10 2004 047 756 A1 and DE 10 2005 018 015 B3, respectively.

In DE 10 2004 047 756 A1 a household baking oven for baking a food product is described. The baking oven comprises a baking chamber for receiving therein the food product via a chamber opening. For measuring the inner temperature of the food product during baking a temperature sensor is provided. The temperature sensor is adapted to wirelessly communicate a signal representative of the temperature to a receiver unit for further handling the signal. The receiver unit is mounted at an inner wall of the baking chamber. However, there is the problem of overheating and damaging the receiver unit due to high temperatures in the baking chamber during baking.

A similar household baking oven for baking a food product is described in DE 10 2005 018 015 B3. Here, an antenna for wireless communication with a temperature sensor for measuring the temperature of the food product is integrated into a lightning device for illuminating the baking chamber. The lightning device is integrated in a recess of an inner wall of the baking chamber. Similarly, there is the problem of damages due to overheating during baking. Further, the comparatively small dimensions of the recess become a limiting factor for position, size and shape of the antenna. This is disadvantageous, as size and shape are closely linked to wireless communication qualities. Further, the aperture of the recess is limiting factor for wireless communication, with the consequence that wireless communication probably will be confined to a portion of the baking chamber. In this case it is not possible to freely position the sensor within the chamber and therefore it is left to the user to appropriately position the sensor in order to guarantee optimal wireless communication. This may be burdensome because many different sized food products can be placed in the baking chamber at respective different positions. Further, as the portion accessible for wireless communication is strongly dependent on the recess of the lightning device, it is not possible to freely choose the mounting position of the lightning device.

US 2006/0254432 A1 describes a cooking apparatus with an information exchange system that provides for local and/or remote monitoring of cooking characteristic, such as temperature. The cooking apparatus comprises a heater, and a food item container for receiving a food item to be heated by said heater, and a door for closing the container. A temperature probe assembly having a food item probe and a cooking characteristic monitoring system are provided, in which the monitoring system includes a local cooking characteristic information conveyance visibly mounted externally on said food item container and having a temperature display device. The local temperature probe information conveyance device may be mounted on top of the food item container, or may be installed in an aperture provided in the door.

It is an object of the invention to avoid the disadvantages addressed above. In particular it is an object of the invention to provide an oven enabling effective wireless communication between a sensor unit freely placeable within a temperature treatment chamber of the temperature treatment device and a receiving or transceiving element provided for wireless communication with the sensor unit, wherein said receiving or transceiving element does not impair the aesthetics of the oven. A further object is to provide an oven in which easy access, access-service, maintenance and cleaning of the receiving or transceiving element is possible.

This object is achieved by an oven according to claim 1. Advantageous embodiments result from the dependent claims.

According to the present invention the at least one receiving or transceiving element is positioned within an interspace between two walls and/or panes of the door, wherein the receiving or transceiving element is provided near an edge of a glass window of the door, and wherein the receiving or transceiving element is shielded by a door printing of the door, and wherein said door printing is located on a border side of the door.

According to the present invention, an oven, such as for example a baking oven or microwave oven for active temperature treatment of a substance is provided. The substance may be fluid, solid or a mixture thereof. Below, and for simplification, the term "device" will be used as a short-term for "temperature treatment device" as far as nothing else is indicated.

The term "active temperature treatment" shall mean that the temperature treatment device is adapted to conduct the temperature treatment, as for example via a heating unit or a microwave generator, e. g. a magnetron. Below, the expression "temperature treatment" will be used as a synonym for "active temperature treatment", as far as nothing else is mentioned
The oven according to the invention comprises a temperature treatment chamber adapted to receive therein the substance via a chamber opening. That is, the chamber has an opening allowing access to the inner volume of the chamber from outside. The chamber represents a baking chamber, also known as muffle, of a household baking oven. Below, and for simplification the term "chamber" will be used as a short-term for "temperature treatment chamber", in particular "oven muffle".

The oven further comprises a door for releasing and closing the chamber opening in a first and second position, respectively. When the door is in the first position, the chamber is accessible from outside; i.e. the substance can be placed in or removed from the chamber. During temperature treatment of the substance, i.e. during normal operation of the oven, the door is in the second position, i.e. the chamber opening is closed. The term "door" shall be interpreted widely, particularly comprising lid-like or cover-like means for releasing and closing chamber openings.

The oven further comprises at least one receiving or transceiving element enabling at least unidirectional wireless communication of signals from and/or to at least one sensor unit which is placed at or within the chamber or is freely placeable within the chamber. Accordingly it is possible to provide one or more receiving or transceiving elements, and one or more sensor units. For simplification, the following description is restricted to the respective singular terms, i.e. receiving or transceiving element and sensor unit. It shall be understood that all statements and conclusions in connection with the singular terms apply to the respective plural terms mutatis mutandis, as far as nothing else is mentioned. In particular, the statements and conclusions related to the singular terms are valid for the respective total number of receiving or transceiving elements and sensor units as well as for a selection thereof.

The term "at least unidirectional wireless communication" implies both unidirectional wireless communication of signals from the sensor unit and bidirectional wireless communication of signals to or from the sensor unit. In connection with unidirectional wireless communication and bidirectional wireless communication, the terms "receiving element" and "transceiving element" are appropriate short-term expressions for the more general term "receiving or transceiving element" comprising both options. In the case of unidirectional wireless communication the receiving element is adapted to receive signals from the sensor unit, whereas in the case of bidirectional wireless communication the transceiving element is adapted to receive and transmit signals from and to the sensor unit, respectively.

According to the invention, the receiving or transceiving element is positioned within an interspace between two walls and/or panes of the door. The receiving or transceiving element may be positioned at or within the door, integrated in the door, positioned on a surface of the door, and/or positioned within a cavity or an interior of the door. The surface can be at least one of an outer surface facing away from the chamber in the second position of the door and a surface facing an interspace between two walls of the door. The cavity can in particular be a free space between two outer and/or inner walls and/or panes of the door.

An advantage of the invention is that the receiving or transceiving element is easily accessible for service and maintenance purposes and the like. Further, it is very simple to retrofit conventional devices with receiving or transceiving elements. In order to retrofit a conventional oven it is possible to exchange the door or to install or integrate such receiving or transceiving element with existing doors. In addition, doors of ovens, such as baking ovens and the like, usually comprise walls or windows that are transparent to electromagnetic radiation that can be used for wireless communication. The receiving or transceiving element can be attached to the transparent sections without the need to modify constructional elements, as for example lightning devices or chamber walls. The invention is therefore universal. An advantage of doors transparent to the respective type of wireless communication is, that wireless communication will be available over the whole or nearly the whole volume of the chamber. A further point is that the door of the oven generally provides enough space such that shape and size of the receiving or transceiving element can be widely varied, for example in order to optimize quality of wireless communication.

The sensor unit may be adapted, i.e. may have a function, to generate a sensor signal suitable for wireless communication and representative of at least one parameter to be monitored during temperature treatment of the substance.

The at least one parameter can be selected from the group comprising but not restricted to temperature, humidity, pressure, density, food product weight. Such parameters are generally representative of the course and status of a temperature treatment process and therefore are of special interest. In many instances the temperature is of particular interest, which can be at least one of a surface temperature of the substance, an inner temperature of the substance and a chamber temperature. The term "chamber temperature" shall mean a temperature within the chamber volume except for the substance, e.g. the temperature of air enclosed in the chamber and surrounding the substance. Similarly, the other parameters can be related to the substance and the chamber volume as well. Particularly in connection with temperature treatment of food products the temperature can be at least one of a surface temperature and core temperature of the substance. Such temperatures are suitable for automatically controlling the temperature treatment process.

The wireless communication can be conducted on the basis of electromagnetic waves having frequencies ranging from radio frequencies to Terahertz (10¹² Hz) and even Petahertz (10¹⁵ Hz) frequencies. For example radio waves, microwaves, infrared light or even visible light can be used. It is also possible to use sound waves or a combination of electromagnetic waves, different types of electromagnetic waves and sound waves. Such combinations may be advantageous for multiple-purpose devices, such as combined microwave and baking ovens. The type of wireless communication shall be selected to best fit the respective type of device and temperature treatment method.

If wireless communication is conducted via radio frequencies, the receiving or transceiving element may be an antenna, especially a wired antenna. Specifically the receiving or transceiving element may comprise at least one of an electrically conductive wire, an electrically conductive band, a strip or strand, preferably in wire-like design, a metallization and an electrically conductive coating. For the purpose of completeness but without going into details, the receiving or transceiving element can comprise light sensitive or light generating elements, if wireless communication via infrared or visible light is involved.

In order to enable wireless communication for as a large volume of the chamber as possible, the receiving or transceiving element may comprise at least one linear section that is oriented parallel to at least one side of door. The at least one side can be at least one of a long side and a short side of the door. Accordingly, the receiving or transceiving element can run in horizontal and vertical direction with respect to the normal operating position of the door in the second position.

The receiving or transceiving element can comprise at least one bent section resulting in at least one of a cove-like, patch-like, meander-like and coiled configuration. By using such sections, the receiving or transceiving element can be adapted to best fit the size or shape of the chamber, such that optimal wireless communication will be available over the volume of the chamber.

The sensor unit can be adapted to passively sense the parameter or parameters. Although an active sensor unit or a combination of active and passive sensor units is also possible.

If a passive sensor unit is selected, the oven can further comprise a power supply unit adapted to wirelessly power the sensor unit. A power supply can be accomplished via at least one receiving or transceiving element, for example by irradiating the sensor unit with electromagnetic radiation.

In order to handle signals to be received from or transmitted to the at least one sensor unit, the receiving or transceiving element can be connected to an electronic receiver or transceiver unit. The receiver or transceiver unit can be positioned remote from the receiving or transceiving element on or within a casing or a frame of the oven. In particular it is possible to position the receiver or transceiver unit such that optimal protection against thermal impacts of temperature treatment.

For establishing an electrical connection between the receiver or transceiver unit and the receiving or transceiving element a door hinge of the door can be used. Apart from this or additionally several other possibilities for electrical connections exist. It is possible to provide a contact section on the door and a counterpart contact section on a frame of the temperature treatment device such that an electrical connection is established when the door is closed. The contact section may be a contact pad, for example. Similarly, a plug section on the door and a counterpart plug section on the frame can be used. Further suitable connections are: one or more clamps, springs, screws and the like. Note that the options mentioned beforehand can also be used for establishing electrical connections, such as power supply lines and signalling lines, between the receiver or transceiver unit and other components of the oven.

In an alternative configuration, the receiver or transceiver unit is positioned on the door or is integrated in a cavity of the door. Selecting as positioning site the door allows easy access for service, maintenance and cleaning purposes. Further it is easier to connect the receiver or transceiver unit to the receiving or transceiving element already positioned at the door site. Contact lines between the receiver or transceiver unit and the receiving or transceiving element can be shortened, so that signal disruption and noise can be effectively reduced.

For adequately processing the signals, for example received from the sensor unit, it is advantageous to additionally provide an electronic signal processing unit adapted to signal processing.

With this embodiment it is possible that the receiver or transceiver unit and the electronic signal processing constitute a single electronic component. This may be of advantage for retrofitting temperature treatment devices with a function to wirelessly measure relevant parameters during temperature treatment. It shall be mentioned, that the above description relating to the position of the receiver or transceiver unit and related electrical connections applies to the signal processing unit mutatis mutandis.

It is also possible that the receiver or transceiver unit and the electronic processing unit are provided as separate components. This may, for example, be advantageous if the temperature treatment device shall have only one central signal processing unit. In this case the electronic processing unit can be positioned remote from the receiving or transceiving element, within a casing or on an inner frame of the temperature treatment device, for example. Again, at least the above description relating to the possibilities of establishing electrical connections applies mutatis mutandis.

The oven may further comprise a monitoring unit, preferably integrated in the electronic processing unit, adapted to monitor the parameter or parameters during temperature treatment of the substance. Such a monitoring unit can be used to automatically control the time course of the temperature treatment process on the basis of at least one of an actual value of the at least one parameter and a time course development of the at least one parameter. In this way a temperature treatment process can be conducted automatically. Here it is of particularly advantage that the invention enables high quality wireless communication leading to better signal quality, which is one of the prerequisites to precisely control the temperature treatment process in an automatic manner.

The device, i.e. oven may, as a further electronic component, comprise a display device for visualizing at least one of a current value and a time course of at least one of the at least one parameter. Such a display device can be used to provide information about at least one of a current status and the time course of the temperature treatment to a user. This may, for certain instances, be advantageous, even if the temperature treatment process is controlled automatically.
The display device can be mounted on or integrated in an outer surface of the door. If the electronic components such as the receiving or transceiving element, the receiver or transceiver unit, the electronic signal processing unit, the monitoring unit and the display device are located at the door site retrofitting of conventional devices such as ovens, stoves and the like is easily possible.
The door can comprise an optical transparent section, preferably made of glass. Such optical transparent sections enable a user to visually check the substance during temperature treatment. The receiving or transceiving element may be attached to the transparent section. This is of particular advantage, if the door - except for respective door frames and door columns which are usually made of metal - is substantially made of glass. It is possible to provide one or more receiving or transceiving elements by integrating antennas in wire-like design in or on a glass window of the door, near an edge of the window. In this case the antennas can be efficiently protected by the glass which constitutes a kind of coating. It shall be noted, that the type of wireless communication can be chosen such that glass induced impacts on the signals, such as absorption, noise and the like, can be largely avoided, as glass is transparent over a wide range of electromagnetic waves. Positioning the receiving or transceiving element near an edge of the window has the advantage that the receiving or transceiving element can be covered by a frame or faceplate of an outer surface of the door. Thereby it is possible to hide the receiving or transceiving element such that the outer appearance of the door is not disturbed.

According to the invention, the receiving or transceiving element is hidden by the door printing in the second position of the door. On the one hand, the outer appearance of the oven door is not disturbed; on the other hand the receiving or transceiving element is shielded at least in the second position of the door against damages due to extrinsic impacts. Further, the door printing is generally located on a border side of the door and is therefore much less exposed to impacts resulting from the temperature treatment process. If for example the temperature treating involves heating of the substance, the probability of overheating and related damages can at least be reduced.
It is also possible that at least one of the receiver or transceiver unit, the electronic processing unit, the monitoring unit, and the display device is positioned on or integrated in the printing area of the door. Similarly, impacts of the temperature treatment process on the operation and proper function of these electronic components can be avoided.
Other equally well suited positions for at least one of the receiving or transceiving element, the receiver or transceiver unit, the electronic signal processing unit, the monitoring unit and the display device are conceivable. In particular it is possible to at least partially position them in a double walled section of the door. The double walled section may for example be a space between two walls of the door. It is also possible to use as mounting position a double walled section of a frame of the door. Particularly, double walled sections of door columns may be used. Further, at least one of a column, an upper frame section and a lower frame section of the frame can be of double walled construction. Note that the terms "upper" and "lower" refer to the orientation of the door during normal operation, i.e. the second position. In particular, the receiving and transceiving element may be positioned in an interspace located in a door column or a lower frame section of the door (5).

Double walled sections are particularly suitable to protect components positioned therein from extrinsic impacts. In general, double walled sections of the frame are mechanically comparatively stable and can provide protection against mechanical impacts. Protection against other than mechanical impacts is also possible. In particular protection against impacts of the temperature treatment process, for example heat can be obtained via thermal insulation, avoiding overheating and related damages. If the double walled section is at least partially transparent to wireless communication even the receiving or transceiving element can be placed therein.

In connection with positioning electronic components, as for example the receiver or transceiver unit, the signal processing unit or the monitoring unit, within a double walled section, it may be advantageous that the double walled section is adapted for guiding through a cooling medium, preferably air, at least in the area comprising the mounting position. In this way the electronic component or components can be cooled efficiently and protected against overheating, damages can be largely avoided and signal processing can be enhanced.

The double walled section may comprise a ventilation channel, separated by channel walls from the mounting position, such that direct contact of the electronic components with the cooling medium can be prevented. Deposition of dust and the like on the electronic components can be prevented. For effective cooling, a ventilation system can be provided, such that the cooling medium can actively be guided or ventilated through the double walled section or the ventilation channel.

Dependent on temperature stability of the components positioned in the double walled section, the double walled section can be designed such that at least in a region comprising the mounting position, a gaseous, fluid or solid medium for passively cooling at least one of the at least one receiving or transceiving element, receiver or transceiver unit, signal processing unit and monitoring unit is enclosed. Here, the gaseous, fluid or solid medium may be thermal insulating.

The device according to the invention is particularly suitable for temperature treatment of food products and beverages, in which case it is possible that the device is selected from but not restricted to the group comprising ovens and stoves adapted to cooking, baking, broiling, browning, roasting, and microwave ovens.

Dependent on respective types of heating, the oven, stove and the like can further comprise a temperature treatment unit for heating the substance via at least one of thermal radiation, thermal convection, steam, microwave to Terahertz electromagnetic fields and magnetic fields.

The object of the invention and all advantages and advantageous effects can also be achieved by a temperature treatment device door according to the door of the temperature treatment device or any embodiment thereof described herein.

The invention will now be described in further detail with reference to the drawings, in which
- FIG. 1: illustrates a schematic perspective view of a temperature treatment device according to the invention;
- FIG. 2: illustrates a schematic plan view of a door of the temperature treatment device;
- FIG. 3: illustrates a schematic perspective view of a door column comprising an electronic component; and
- FIG. 4: illustrates a schematic sectional view of an embodiment of the door column of FIG. 3.

It shall be noted, that like reference numerals denote like elements, or elements that are similar or similar in function. The Figures are schematic and not necessarily true to scale. The invention will be described in connection with a household baking oven, which shall not be construed as limiting the scope of invention. The function of the baking oven is described as far as necessary for understanding the invention.

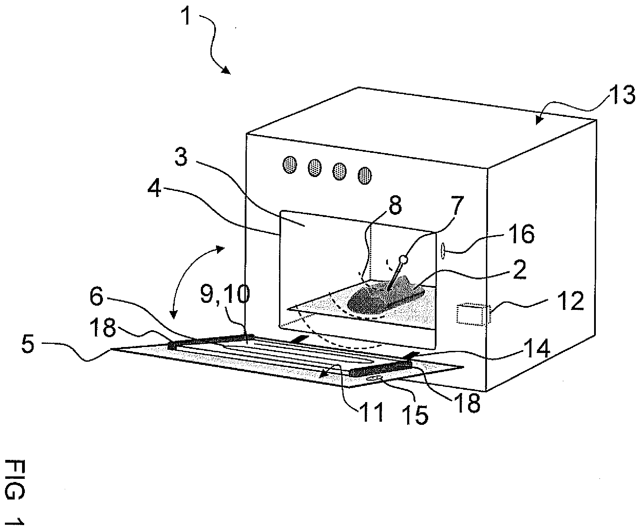

FIG. 1 illustrates a perspective view of a household baking oven 1. The baking oven 1 is for temperature treatment of a substance. Here, the substance is a food product 2 illustrated as pastry. In general, the food product can be any type of food product. In particular, the food product can be solid, fluid or a mixture thereof, suitable for temperature treatment, i.e. for being heated, in the baking oven 1.

The baking oven 1 comprises a temperature treatment chamber 3. Note, that below, the term "chamber" will be used as a short-term for "temperature treatment chamber". The chamber 3 has a chamber opening 4 via which the food product 2 can be placed in and removed from the chamber 3.

The baking oven 1 further comprises a door 5 designed for releasing and closing the chamber opening 4 in a first and second position, respectively. In the present illustration, the door 5 is in the first position, i.e. the food product 2 has just been positioned in the chamber 3 or is ready for being removed from the chamber 3. During normal operation, i.e. during temperature treatment as for example baking, the door 5 is in the second position (not shown here). In the second position the chamber opening 4 and hence the chamber 3 is tightly closed by the door 5, via appropriate temperature-resistant sealing elements (not shown) for example.

The baking oven 1 further comprises a receiving element 6. The receiving element 6 enables wireless communication of signals from a sensor unit 7 freely placeable within the chamber 3. Wireless communication is schematically indicated by bended lines denoted by reference numeral 8.

The receiving element 6 is designed for receiving signals from the sensor unit 7 only. In the present embodiment only unidirectional wireless communication 8 from the sensor unit 7 to the receiving element 6 is possible. However this shall not limit the scope of invention. It is also possible, that bidirectional wireless communication from and to the sensor unit 7 is enabled. In this case a transceiving element will be used instead of the receiving element 6. Note that the invention covers both unidirectional and bidirectional wireless communication; and these two options are covered by the term "receiving or transceiving element". Parts of the following description are restricted to the term "receiving element", which shall not limit the scope of invention. The most part of the description below will apply to transceiving elements or more generally speaking to "receiving or transceiving elements" as well.

Further, the invention is neither limited to a single receiving or transceiving element nor to a single sensor unit 7. Within the scope of invention it is possible to use more than one receiving or transceiving element and more than one sensor unit 7, in which case the statements below apply mutatis mutandis.

The sensor unit 7 is freely placeable within the chamber 3. That is, the sensor unit 7 is not cable bound and can be placed anywhere within the chamber 3.

With the present embodiment, the sensor unit 7 is adapted to generate a sensor signal suitable for wireless communication 8. The sensor signal is representative of a temperature of the food product 2. A temperature sensor can be provided in a tip of the sensor unit 7, for example, which tip is inserted into the food product 2, as illustrated in FIG. 1. In this way, the inner or kernel temperature of the food product 2 can be monitored during baking. The senor unit 7 may optionally comprise further temperature sensors for sensing other relevant temperatures during temperature treatment. Such further temperature sensors, either integrated in one or in different sensor units 7, can for example be used to measure the surface temperature of the food product and the temperature prevailing in the chamber during baking. Sensor units of these types are known for example from DE 10 2004 047 756 A1, DE 10 2005 015 028 A1, DE 29 35 282 A1, EP 0 687 866 B1, US 4,475,024, US 4,518,839 and US 4,230,731, respectively, which are incorporated in full by reference. Further, other types of sensor units 7 are conceivable, as for example sensor units 7 adapted to generate a signal representative of parameters like humidity, pressure, density, food product weight and others.

According to the invention, the receiving element 6 and the door 5 make up one functional unit. With the embodiment shown in FIG. 1 two possibilities are conceivable: i) the receiving element 6 is positioned on a surface 9 of the door 5 and ii) the receiving element 6 is integrated in the door 5.

In the first case, the receiving element 6 can be positioned on an inner surface of an optical transparent section 10 of the door 5 for example. Such optical transparent section 10, e.g. a glass segment, enabling a user to visually control the time course of baking. The inner surface can be a surface facing an interspace between two walls of the door 5. This is the case with a door 5 comprising two or multiple walls for enhancing stability and thermal insulation for example.

In a similar embodiment, the door 5 can comprise a panel attached to a door frame, which panel comprises one or several glass plates, preferably in sandwich like design. Such a panel can comprise up to four or more glass plates. In this case, the transparent section 10 is integrated part of the panel.

The receiving element 6 can also be placed on an imprinting section of the panel mentioned beforehand, which section is intended for imprints and the like. The imprinting section may be located anywhere on the outer surface, for example on an upper and/or lower part of the panel.

In the second case, i.e. if the receiving element 6 is integrated in the door, the receiving element 6 may be integral part of a section of the door 5, that is transparent to wireless communication. Therefore, the receiving element 6 can be integrated in the optical transparent section 10 made from glass for example. Such optical transparent sections 10 generally are transparent to electromagnetic waves typically used for wireless communication. By integrating or embedding the receiving element 6 into the glass segment, the receiving element 6 can be protected against or shielded from extrinsic impacts. In the case that the door 5 comprises several walls, it is possible that the receiving element 6 is integrated in any of these walls.

Other possibilities for arranging the receiving element 6 are conceivable and are described further below.

Amongst others, the position resulting in optimal quality of wireless communication 8 will vary from case to case. Dependences on the type of wireless communication 8, materials used for the door 5 and the kind of temperature treatment method are conceivable. It shall be mentioned, that the type of temperature treatment can be of any type, comprising but not limited to thermal radiation, thermal convection, steam, electromagnetic fields and magnetic fields.

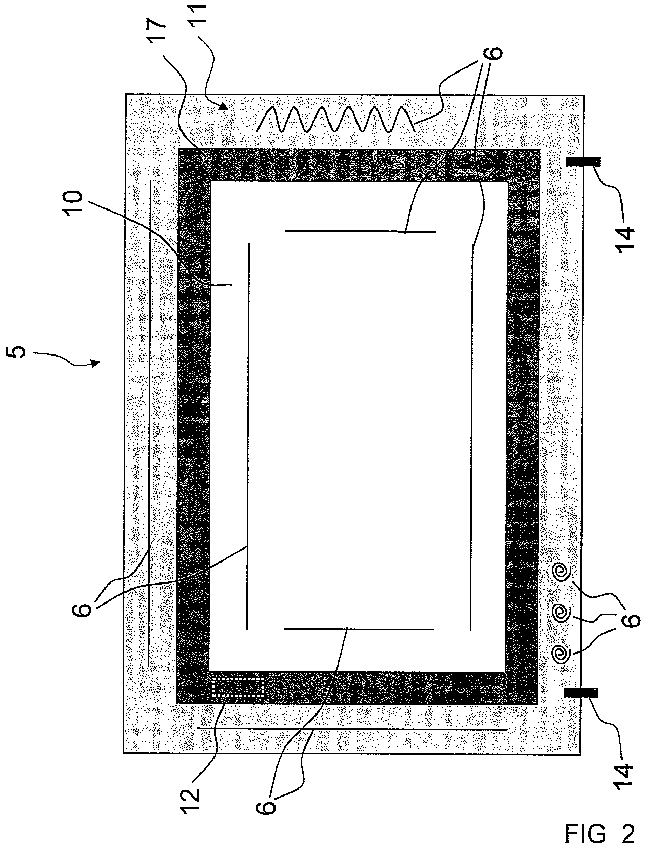

The type of wireless communication 8 can be based on at least one of electromagnetic waves ranging from radio frequencies to microwave, even up to Terahertz frequencies and sound waves. In the case of electromagnetic waves, the receiving element 6 can be designed as antenna. The antenna may be a conductive wire, as in FIG. 1 and 2, an electrically conductive band, strip or strand, preferably in wire-like design, and a metallization or an electrically conductive coating of the surface 9. Other types of receiving elements 6 may be selected according to respective types of wireless communication.

The type of wireless communication, the type of receiving element and the type of temperature treatment method are interdependent to a certain extent. However, as soon as the type of oven is known, it will be easy to select the appropriate combination of receiving or transceiving element and wireless communication, including but not limited to the possibilities given above.

The inventive arrangement of the receiving element 6 has several advantages as compared to conventional temperature treatment devices. With the inventive concept it is much easier to freely position or integrate the receiving element 6, as the door 5 is far more flexible with regard to constructive modifications as compared to chamber walls usually made of metal. Further, effective and undisturbed wireless communication between the receiving element 6 and the sensor unit 7 can be achieved almost over the whole volume of the chamber 3. A further advantage is that nearly any oven can be retrofitted at low cost and effort without the need for extensive constructive changes. In addition, the arrangement according to the invention allows easy access, access-service and maintenance, including cleaning and exchange of at least the receiving element 6.

In the embodiment illustrated in FIG. 1, the receiving element 6 has a meander-like design. Of course, this is not limiting the scope of invention. The receiving element 6 can be of any suitable design and comprise arbitrary straight, coiled, bent, meander-like, patch-like and cove-like sections. This is useful for adapting the shape of the receiving element 6 to high quality wireless communication 8. Linear sections of the receiving element 6 can run parallel to at least one side or edge of the door 5 and a wall of the door, respectively. The side may be a long side or short side. In this case, the linear section of the receiving element 6 is oriented in horizontal or vertical direction with respect to the second position the door 5.

FIG. 2 illustrates a plan view of the door 5 in the first position when viewed from top. That is, the surface looked at in FIG. 2 is directed towards the chamber 3 if the door 5 is in the second position. Several possibilities with respect to shape and position of the receiving element 6 addressed above are exemplified. Note that the number, shapes and positions may vary from case to case. In FIG. 2, the receiving elements 6 are antennas in wire-like design. This however shall not restrict the scope of invention; all the other possibilities mentioned further above are conceivable and the exemplified positions can be used for other types of receiving elements as well.

In the optical transparent section 10 in total four antennas 6 are arranged, two running in vertical and two running in horizontal direction. In contrast to FIG. 1, the antennas 6 in the optical transparent section 10 are not meander-shaped.

Further, receiving elements 6 are arranged in a printing area 11 of the door 5. In the top and left hand sections of the printing area 11 two receiving elements 6 run in horizontal and vertical direction, respectively. The antenna 6 in the right hand section is meander-shaped, whereas the antennas 6 in the bottom section of the printing area 11 are of coil-like design.

The sensor unit 7 preferably is a passive sensor to passively sense at least one of the parameters mentioned above. In connection with passive sensors, the temperature treatment device may comprise a power supply unit adapted to wirelessly power the passive sensor unit, preferably via a transceiving element. In the event that a transceiving element is used for powering the sensor unit, a bidirectional wireless communication is provided. In this context it shall be mentioned that wireless communication is not restricted to unidirectional or bidirectional transmission of signals, but also comprises for example transmission of energy consumed by the sensor unit and the like.

However, active sensors shall not be excluded. Therefore the sensor unit 7 may be an active sensor, as well.

For handling wireless communication 8 with the sensor unit 7, the baking oven 1 may further comprise at least one electronic receiver or transceiver unit. For the term "receiver or transceiver unit" the same applies as mentioned in connection with the term "receiving or transceiving element". That is, the receiver or transceiver unit can either be a receiver unit or a transceiver unit for unidirectional and bidirectional wireless communication, respectively. For convenience, the description below is restricted to the term "receiver unit", as far as nothing else is indicated. This shall however not limit the scope of invention. Rather, the description below similarly applies as far as appropriate to transceiver units in the case of bidirectional wireless communication.

Amongst others, the receiver unit can be adapted to amplify signals received from the sensor unit 7. Other functions relevant for receiving signals in the course of wireless communication are possible, as for example wirelessly providing power for operation of the sensor unit. It shall explicitly be noted, that more than one receiver or transceiver units can be provided, in which case the description below applies mutatis mutandis.

The receiver unit can, in one embodiment, be positioned remote from the receiving element 6. An example is given in FIG. 1, in which a receiver unit 12 is placed within a casing 13 or frame of the baking oven 1. As the receiver unit 12 is hidden by the casing 13, it is depicted by a dotted box. In principle, any position within the casing is possible. Preferably, the receiver unit is positioned near a door hinge 14 of the door 5. In doing so, it is easier to connect the receiver unit 12 to the receiving element 6 via the door hinge 14 or door hinges 14 without the risk of overlength connection lines, which could readily lead to signal disruption. Other types of connection between the receiver unit 12 and the receiving element 6 at least in the second position of the door 5 can be a least one of a contact section 15 on the door 5 and a counterpart contact section 16 on a frame of the baking oven 1, a plug section on the door 5 and a counterpart plug section on the frame, one or several clamps, and one or several springs (not shown).

Alternatively, the receiver unit 12 can be positioned on or integrated in a cavity of the door 5. This allows positioning the receiver unit 12 close to the receiving element 6, leading to shortened connection lines, which in turn can enhance signal quality. For example, the receiver unit 12 can be positioned within a cavity of a door frame 17. This is the case with FIG. 2, in which the receiver unit 12 is illustrated as dotted square in the top left. Other cavities of the door 5 are conceivable. If the door 5 for example has a double walled section, then the receiver unit 12 can be placed in an interspace between the walls. Within the scope of invention, a double walled section of the door is any section comprising at least two adjacent walls having an interspace therebetween.

In general, any location of the door frame 17 can be used as a mounting position for the receiver unit 12. In particular, the receiver unit can be placed within upper and lower parts of the frame, running in horizontal direction in FIG. 2. Further, vertical sections of the door frame 17 can be used, which vertical sections are also known as door columns are denoted by reference numeral 18 in FIG. 1.

In a further embodiment, the baking oven 1 comprises an electronic signal processing unit adapted to signal processing of the signals received from or transmitted to the sensor unit. In the present embodiment, the signal processing unit and the receiver unit 12 are combined to form one single electronic component. That is, the signal processing unit is integrated in the receiver unit 12 or vice versa. This however shall not limit the scope the invention. It is also possible, that the receiver unit 12 and the signal processing unit are provided as separate electronic components.

In the case that the receiver unit 12 and the signal processing unit form separate electronic components, the electronic processing unit can be positioned remote from the receiving element 6 and the receiver unit 12, respectively. For example, it is possible, that the signal processing unit is positioned within the casing 13 or on an inner frame of the baking oven 1. Here, the signal processing unit and the receiver unit 12 can be located at different positions within the casing 13, or the signal processing unit can be located within the casing 13 and the receiver unit 12 can be located on or in the door 5. In the latter case, the signal processing unit and the receiver unit 12 may be connected via similar connections and connectors as mentioned above, i.e. hinges, contact sections, plugs, clamps, springs and the like.

Returning now to the case, in which the mounting position of the electronic component is within a door column 18 and in which the signal processing unit and the receiver unit 12 are combined to form a single electronic component. For the latter reason, the electronic component will also be denoted by reference numeral 12. As far as appropriate, the following description applies mutatis mutandis to at least one of the receiving element 6, the receiver unit 12, the signal processing unit and further components mentioned below, irrespective of whether they are provided individually or in arbitrary combination.

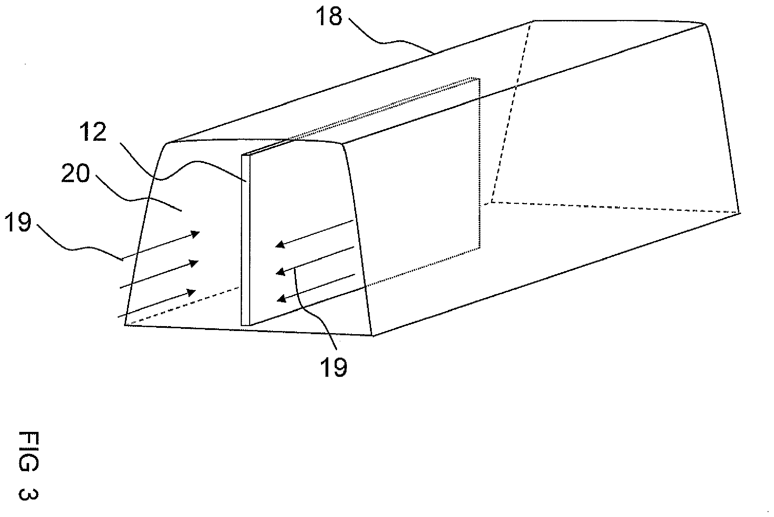

With the present case, the door column 18 can be adapted to guiding through a cooling medium, preferably air, for cooling the electronic component 12. This situation is illustrated in FIG. 3 illustrating a schematic perspective view of the door column 18 in which the electronic component 12 is positioned. An airflow 19, or more generally speaking a flow of cooling medium, is passed through a ventilation channel 20 made up of the walls of the door column 18, in order to cool the electronic component 12. Cooling of the electronic component 12 is advantageous, as during baking, the space within the door column 18 is heated to temperatures that may influence, may cause malfunction or, in the worst case, may damage the electronic component 12. In addition, heat generated by the electronic component during operation can be dissipated.

In FIG. 3, the airflow 19 is bidirectionally guided through the door column 18 in a counterflow-like manner. This is advantageous if the door column 18 is divided into at least two sub-chambers. However, unidirectional airflow 19 is also possible.

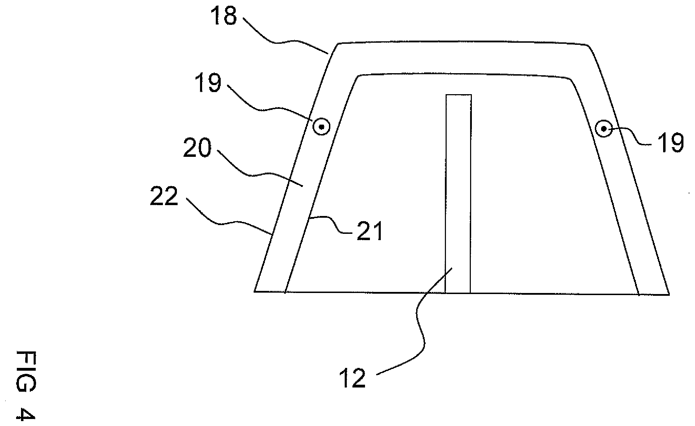

FIG. 4 illustrates a schematic sectional view of an embodiment of the door column 18. Again, the electronic component 12 is positioned within the door column 18. The embodiment of FIG. 4 differs from that in FIG. 3 in that the ventilation channel 20 is separated from the electronic component 12. The ventilation channel 20 has an inner 21 and an outer channel wall 22. The outer channel wall 22 is identical to an outer wall of the door column 18. The inner channel wall 21 is displaced from the outer channel wall 22 leaving an interspace therebetween, which constitutes the ventilation channel 20. The ventilation channel 20 is used for guiding through the airflow 19 similarly as with FIG. 3. With the present case, the airflow 19 is unidirectional, but can also be bidirectional.

The airflow 19 indirectly cools the space inside the inner channel wall 21 so that the electronic component 12 can be prevented from being overheating during baking. In addition, heat generated by the electronic component 12 can be dissipated. A further advantage of the embodiment shown in FIG. 4 is that the electronic component 12 is shielded by the inner channel wall 21 from the airflow 19. Therefore the electronic component 12 can be prevented from getting in contact with dust and other harmful substances contained in the airflow 19.

Still with reference to FIG. 3 and FIG. 4, the baking oven 1 can further comprise a ventilation system (not shown) for actively guiding the airflow 19 through the ventilation channels 20. The ventilation system can either as a whole be part of the door 5 or at least parts thereof, e. g. a ventilator for generating the airflow 19, can be positioned within the casing 13. In the latter case a connection between ventilation ducts located at the door side and ducts located at the casing side can comprise a flexible duct or plug-like connectors for establishing a connection between the ventilation ducts at least in the second position of the door 5.

Now with particular reference to FIG. 4, instead of guiding the airflow 19 through the ventilation channel 20, the interspace between the inner 21 and outer channel walls 22 may at least partially be filled with an insulating medium, which may be gaseous, fluid or solid. Thermal conduction through the channel walls 21 and 22 may be enhanced by the insulating medium. With particular reference to FIG. 4, if the interspace between the inner 21 and outer channel wall 22 is filled with an insulating medium, the space surrounded by the inner channel wall 21 can be used as ventilation channel, so that both ventilation and insulation can be provided.

It is also possible, that the space surrounding the electronic component 12 is at least partially filled with an insulating medium, preferably gaseous or solid. In the case of FIG. 3, this space corresponds to the ventilation channel 20. In the case that this space is partially filled, extra cooling may be provided by airflow 19.

In a further embodiment, the baking oven 1 can comprise a monitoring unit (not shown) adapted to monitor the at least one parameter during temperature treatment. The monitoring unit can be integral part of the electronic component 12. However it is also possible that the monitoring unit is provided as a separate component, in which case the above description of establishing a connection between electronic processing unit and receiver unit and effective cooling applies mutatis mutandis.

The monitoring unit can be adapted to automatically control the course of temperature treatment. The automatic control can be based on at least one actual value of one of the parameters. It is also possible, that the automatic control uses information about the time course development of at least one parameter sensed by the sensor unit 7.

The baking oven 1 may further comprise a display device for visualization of at least one of a current value or time course development of the parameter. The display device can be integrated in the casing 13. However, it is also possible to mount the display device on or integrate it in the door 5. Here, the above description of establishing a connection between electronic processing unit and receiver unit and effective cooling applies mutatis mutandis.

Providing the electronic components and the receiving or transceiving element on, in particular within, the door 5 has the advantages of easy retrofitting, easy access for maintenance and service and the like.

Although the invention has been described in connection with a baking oven 1, the invention can be applied to other types of ovens, wherein all the advantages and advantageous effects described in connection with the baking oven 1 can be achieved at least in a similar way.

### List of reference numerals

- 1: baking oven
- 2: food product
- 3: temperature treatment chamber
- 4: chamber opening
- 5: door
- 6: receiving element
- 7: sensor unit
- 8: wireless communication
- 9: surface
- 10: optical transparent section
- 11: printing area
- 12: receiver unit
- 13: casing
- 14: door hinge
- 15: contact section
- 16: counterpart contact section
- 17: door frame
- 18: door column
- 19: airflow
- 20: ventilation channel
- 21: inner channel wall
- 22: outer channel wall

## Claims

1. Oven (1), in particular baking oven or microwave oven comprising:
an oven muffle (3) for active temperature treatment of a substance (2) and adapted to receive therein the substance (2) via a chamber opening (4);
a door (5) designed for releasing and closing the chamber opening (4) in a first and second position, respectively; and
at least one receiving or transceiving element (6) enabling at least unidirectional wireless communication (8) of signals from and/or to at least one sensor unit (7) which is placed at or within the oven muffle (3);
**characterised in that**
the at least one receiving or transceiving element (6) is positioned within an interspace between two walls and/or panes of the door (5), wherein the receiving or transceiving element (6) is provided near an edge of a glass window (10) of the door (5), and wherein the receiving or transceiving element (6) is shielded by a door printing (11) of the door (5), and wherein said door printing (11) is located on a border side of the door (5).

2. Oven (1) according to claim 1, wherein the interspace is confined between two outer and/or inner walls and/or panes, in particular between an outer and an inner wall and/or pane of the door (5), wherein the panes are optionally implemented as glass panes, and wherein the interspace is optionally implemented as an interspace cavity of the interior of the door (5).

3. Oven (1) according to at least one of claims 1 and 2,
wherein the at least one receiving or transceiving element is positioned on a surface of the wall and/or pane, wherein the surface is one of an outer surface facing away from the chamber in the second position of the door, and a surface facing an interspace between two walls of the door (5).

4. Oven (1) according to at least one of claims 1 to 3,
wherein the interspace is located in a vertical section of the door frame (18), in particular a door column (18) of the door (5), or a lower frame section of the door (5).

5. Oven (1) according to at least one of claims 1 to 4, further comprising the following features:
the wireless communication (8) comprises a bidirectional transmission of signals from and to the at least one sensor unit (7), wherein:
the at least one parameter optionally is selected from the group comprising temperature, humidity, pressure, density, food product weight, and/or
the temperature optionally is at least one of a surface temperature of the substance (2), an inner temperature of the substance (2) and a chamber temperature.

6. Oven (1) according to at least one of claims 1 to 5, wherein:
the wireless communication (8) is conducted on the basis of electromagnetic waves, the electromagnetic waves optionally being electromagnetic waves having frequencies ranging from radio frequencies to Petahertz frequencies, in particular radio waves, microwaves, infrared and/or visible light, and/or sound waves.

7. Oven (1) according to at least one of claims 1 to 6 comprising one or more than one of the following features:
the at least one receiving or transceiving element (6) is an antenna, preferably a wired antenna, designed for communication of electromagnetic wave signals;
the or a receiving or transceiving element (6) comprises at least one of an electrically conductive wire, an electrically conductive band, a strip or strand, preferably in wire-like design, a metallization and an electrically conductive coating;
the or a receiving or transceiving element (6) comprises at least one linear section, the at least one linear section being oriented parallel to at least one side of the door (5), the at least one side being at least one of a long side and a short side;
at least one of the or a at least one receiving or transceiving element (6) comprises at least one bent section resulting in at least one of a cove-like, patch-like, meander-like and coiled configuration of the at least one receiving or transceiving element (6).

8. Oven (1) according to at least one of claims 1 to 7, wherein the oven (1) further comprises a power supply unit adapted to wirelessly power the at least one sensor unit (7), preferably via at least one of the at least one receiving or transceiving element (6).

9. Oven (1) according to at least one of claims 1 to 8, further comprising one or more than one of the following features:
the at least one receiving or transceiving element (6) is connected to an electronic receiver or transceiver unit (12), the receiver or transceiver unit (12) optionally being positioned remote from the at least one receiving or transceiving element (6) on or within a casing (12) or a frame of the temperature treatment device (1);
at least one of a door hinge (14) of the door (5), a contact section (16) on the door (5) and a counterpart contact section (16) on a frame of the temperature treatment device (1), a plug section on the door (5) and a counterpart plug section on a frame of the temperature treatment device (1), one or several clamps, and one or several springs is/are used for establishing a contact between the at least one receiving or transceiving element (6) and the receiver or transceiver unit (12), at least in the second position of the door (5).

10. Oven (1) according to at least one of claims 1 to 9, further comprising an electronic signal processing unit adapted to signal processing of the signals, the oven (1) optionally further comprising one or more of the following features:
the receiver or transceiver unit (12) and the electronic signal processing unit constitute a single electronic component (12) or the receiver or transceiver unit (12) and the electronic processing unit are provided as separate components;
the electronic processing unit is positioned remote from the receiver or transceiver unit (12), within a casing (13) or on an inner frame of the temperature treatment device (1);
at least one of a door hinge (14) of the door (5), a contact section (15) on the door (5) and a counterpart contact section (16) on a frame of the temperature treatment device (1), a plug section on the door (5) and a counterpart plug section on a frame of the temperature treatment device (1), one or several clamps, and one or several springs is/are used for establishing a contact between the electronic processing unit and the receiver or transceiver unit (12), at least in the second position of the door (5).

11. Oven (1) according to claim 10, the oven comprising one or more than one of the following features:
a monitoring unit, preferably integrated in the electronic processing unit, adapted to monitor the at least one parameter during temperature treatment of the substance (2), wherein the monitoring unit is optionally further adapted to automatically control the course of the temperature treatment, on the basis of at least one of an actual value of the at least one parameter and a time course development of the at least one parameter;
a display device adapted to visualize at least one of a current value and a time course of at least one of the at least one parameter, the display device optionally being at least one of mounted on or integrated in an outer surface of the door (5) and mounted on or integrated in an outer surface of a casing (13) of the oven (1).

12. Oven (1) according to at least one of claims 1 to 11, further comprising one or more than one of the following features:
the receiving or transceiving element (6) is covered and hidden by a frame or faceplate of an outer surface of the door (5);
at least one of the at least one receiving or transceiving element (6), the receiver or transceiver unit (12), the electronic processing unit, the monitoring unit, and the display device is at least one of positioned on and integrated in a printing area (11) of the door (5).

13. Oven (1) according to at least one of claims 1 to 12,
wherein a mounting position of least one of the at least one receiving or transceiving element (6), the receiver or transceiver unit (12), the electronic signal processing unit and the monitoring unit is at least one of a double walled section of the door (5) and a double walled section of a frame (17) of the door (5), a double walled section of a door column (18), of an upper or lower frame of the door (5), the oven (1) optionally comprising one or more than one of the following features:
at least in an area comprising the mounting position, the double walled section is adapted for guiding through a cooling medium, preferably air, for cooling at least one of the at least one receiving or transceiving element (6), the receiver or transceiver unit (12), the signal processing unit and the monitoring unit;
the double walled section comprises a ventilation channel (20) separated by channel walls (21, 22) from the mounting position;
the temperature treatment device (1) further comprises a ventilation system for actively ventilating the cooling medium through the double walled section;
at least in a region comprising the mounting position, a gaseous, fluid or solid medium for passively cooling of at least one of the at least one receiving or transceiving element (6), receiver or transceiver unit (12), signal processing unit and monitoring unit is enclosed.

14. Oven (1) according to at least one of claims 1 to 13,
wherein the substance (2) is at least one of a food product and beverage, the temperature treatment being selected from but not restricted to the group comprising cooking, baking, broiling, browning, roasting; and/or
further comprising a temperature treatment unit adapted to heat the substance (2) via at least one of thermal radiation, thermal convection, steam, microwave to up to Petahertz electromagnetic fields and magnetic fields.

## Patentansprüche

1. Ofen (1), insbesondere Backofen oder Mikrowellenofen, umfassend:
eine Ofenmuffel (3) zur aktiven Temperaturbehandlung einer Substanz (2), und die vorgesehen ist, um darin mittels einer Kammeröffnung (4) die Substanz (2) zu empfangen;
eine Tür (5), die zum Freigeben und Schließen der Kammeröffnung (4) in einer ersten beziehungsweise zweiten Position konzipiert ist; und
mindestens ein empfangendes oder übermittelndes Element (6), das mindestens unidirektionale Drahtloskommunikation (8) von Signalen von mindestens einer Sensoreinheit (7) und/oder zu dieser ermöglicht, wobei die Sensoreinheit an oder innerhalb der Ofenmuffel (3) platziert ist;
**dadurch gekennzeichnet, dass**
das mindestens eine empfangende oder übermittelnde Element (6) innerhalb eines Zwischenraums zwischen zwei Wänden und/oder Scheiben der Tür (5) positioniert ist, wobei das empfangende oder übermittelnde Element (6) nahe einem Rand eines Glasfensters (10) der Tür (5) bereitgestellt wird, und wobei das empfangende oder übermittelnde Element (6) durch eine Türbedruckung (11) der Tür (5) abgeschirmt wird, und wobei sich die Türbedruckung (11) an einer Einfassungsseite der Tür (5) befindet.

2. Ofen (1) nach Anspruch 1, wobei der Zwischenraum zwischen zwei äußeren und/oder inneren Wänden und/oder Scheiben örtlich begrenzt ist, insbesondere zwischen einer äußeren und einer inneren Wand und/oder Scheibe der Tür (5), wobei die Scheiben gegebenenfalls als Glasscheiben implementiert sind, und wobei der Zwischenraum gegebenenfalls als Zwischenhohlraum des Innenbereichs der Tür (5) implementiert wird.

3. Ofen (1) nach mindestens einem der Ansprüche 1 und 2, wobei das mindestens eine empfangende oder übermittelnde Element auf einer Oberfläche der Wand und/oder Scheibe positioniert wird, wobei die Oberfläche eine von einer äußeren Oberfläche, die in der zweiten Position der Tür von der Kammer weg weist, und einer Oberfläche ist, die zu einem Zwischenraum zwischen zwei Wänden der Tür (5) weist.

4. Ofen (1) nach mindestens einem der Ansprüche 1 bis 3, wobei der Zwischenraum sich in einem vertikalen Segment des Türrahmens (18) befindet, insbesondere einer Türsäule (18) der Tür (5) oder einem unteren Rahmensegment der Tür (5).

5. Ofen (1) nach mindestens einem der Ansprüche 1 bis 4, des Weiteren umfassend die folgenden Merkmale:
die Drahtloskommunikation (8) umfasst eine bidirektionale Übertragung von Signalen von der mindestens einen Sensoreinheit (7) und zu dieser, wobei:
der mindestens eine Parameter gegebenenfalls ausgewählt ist aus der Gruppe, die Temperatur, Feuchtigkeit, Druck, Dichte, Gewicht des Nahrungsprodukts umfasst, und/oder
die Temperatur gegebenenfalls mindestens eine von einer Oberflächentemperatur der Substanz (2), einer Innentemperatur der Substanz (2) und einer Kammertemperatur ist.

6. Ofen (1) nach mindestens einem der Ansprüche 1 bis 5, wobei:
die Drahtloskommunikation (8) auf Basis von elektromagnetischen Wellen geführt wird, wobei die elektromagnetischen Wellen gegebenenfalls elektromagnetische Wellen mit Frequenzen im Bereich von Hochfrequenzen bis Petahertz-Frequenzen sind, insbesondere Hochfrequenzwellen, Mikrowellen, Infrarot und/oder sichtbares Licht, und/oder Schallwellen.

7. Ofen (1) nach mindestens einem der Ansprüche 1 bis 6, umfassend eines oder mehr als eines der folgenden Merkmale:
das mindestens eine empfangende oder übermittelnde Element (6) ist eine Antenne, vorzugsweise eine verdrahtete Antenne, die zur Kommunikation von elektromagnetischen Wellensignalen konzipiert ist;
das oder ein empfangende(s) oder übermittelnde(s) Element (6) umfasst mindestens eines von einem elektrisch leitfähigen Draht, einem elektrisch leitfähigen Band, einem Streifen oder Strang, vorzugsweise in drahtartigem Design, einer Metallisierung und einer elektrisch leitfähigen Beschichtung;
das oder ein empfangende(s) oder übermittelnde(s) Element (6) umfasst mindestens ein lineares Segment, wobei das mindestens eine lineare Segment parallel zu mindestens einer Seite der Tür (5) orientiert ist, wobei die mindestens eine Seite mindestens eine von einer langen Seite und einer kurzen Seite ist;
mindestens eines von dem oder einem mindestens einem empfangenden oder übermittelnden Element (6) umfasst mindestens ein gebogenes Segment, das zu mindestens einer einbuchtungsartigen, fleckartigen, mäanderartigen oder aufgewickelten Konfiguration des mindestens einen empfangenden oder übermittelnden Elements (6) führt.

8. Ofen (1) nach mindestens einem der Ansprüche 1 bis 7, wobei der Ofen (1) des Weiteren eine Stromversorgungseinheit umfasst, die vorgesehen ist, um die mindestens eine Sensoreinheit (7) drahtlos mit Strom zu versorgen, vorzugsweise mittels mindestens einem von dem mindestens einen empfangenden oder übermittelnden Element (6).

9. Ofen (1) nach mindestens einem der Ansprüche 1 bis 8, des Weiteren umfassend eines oder mehr als eines der folgenden Merkmale:
das mindestens eine empfangende oder übermittelnde Element (6) ist mit einer elektronischen Empfänger- oder Sendeempfängereinheit (12) verbunden, wobei die Empfänger- oder Sendeempfängereinheit (12) gegebenenfalls entfernt von dem mindestens einen empfangenden oder übermittelnden Element (6) auf oder innerhalb eines Gehäuses (12) oder eines Rahmens der Temperaturbehandlungsvorrichtung (1) positioniert ist;
mindestens eines von einem Türscharnier (14) der Tür (5), einem Kontaktsegment (16) auf der Tür (5) und einem Gegenkontaktsegment (16) auf einem Rahmen der Temperaturbehandlungsvorrichtung (1), einem Steckersegment auf der Tür (5) und einem Gegensteckersegment auf einem Rahmen der Temperaturbehandlungsvorrichtung (1), einer oder mehreren Klemmen und einer oder mehreren Federn wird bzw. werden verwendet, um einen Kontakt zwischen dem mindestens einen empfangenden oder übermittelnden Element (6) und der Empfänger- oder Sendeempfängereinheit (12) herzustellen, mindestens in der zweiten Position der Tür (5).

10. Ofen (1) nach mindestens einem der Ansprüche 1 bis 9, des Weiteren umfassend eine elektronische Signalverarbeitungseinheit, die zur Signalverarbeitung der Signale vorgesehen ist, wobei der Ofen (1) gegebenenfalls des Weiteren ein oder mehrere der folgenden Merkmale umfasst:
die Empfänger- oder Sendeempfängereinheit (12) und die elektronische Signalverarbeitungseinheit bilden eine einzelne elektronische Komponente (12), oder die Empfänger- oder Sendeempfängereinheit (12) und die elektronische Verarbeitungseinheit werden als separate Komponenten bereitgestellt;
die elektronische Verarbeitungseinheit ist entfernt von der Empfänger- oder Sendeempfängereinheit (12), innerhalb eines Gehäuses (13) oder auf einem Innenrahmen der Temperaturbehandlungsvorrichtung (1) positioniert;
mindestens eines von einem Türscharnier (14) der Tür (5), einem Kontaktsegment (15) auf der Tür (5) und einem Gegenkontaktsegment (16) auf einem Rahmen der Türbehandlungsvorrichtung (1), einem Steckersegment auf der Tür (5) und einem Gegensteckersegment auf einem Rahmen der Temperaturbehandlungsvorrichtung (1), einer oder mehreren Klemmen und einer oder mehreren Federn wird bzw. werden verwendet, um einen Kontakt zwischen der elektronischen Verarbeitungseinheit und der Empfänger- oder Sendeempfängereinheit (12) herzustellen, mindestens in der zweiten Position der Tür (5).

11. Ofen (1) nach Anspruch 10, wobei der Ofen eines oder mehr als eines der folgenden Merkmale umfasst:
eine Überwachungseinheit, die vorzugsweise in die elektronische Verarbeitungseinheit integriert ist und zum Überwachen des mindestens einen Parameters während der Temperaturbehandlung der Substanz (2) vorgesehen ist, wobei die Überwachungseinheit gegebenenfalls des Weiteren zur automatischen Steuerung des Verlaufs der Temperaturbehandlung auf der Basis von mindestens einem von einem tatsächlichen Wert des mindestens einen Parameters und einer Entwicklung des mindestens einen Parameters im Zeitverlauf vorgesehen ist;
eine Anzeigevorrichtung, die zum Visualisieren von mindestens einem von einem aktuellen Wert und einem Zeitverlauf von mindestens einem des mindestens einen Parameters vorgesehen ist, wobei die Anzeigevorrichtung gegebenenfalls mindestens eines von auf einer äußeren Oberfläche der Tür (5) montiert oder in diese integriert und auf einer äußeren Oberfläche eines Gehäuses (13) des Ofens (1) montiert oder in diese integriert ist.

12. Ofen (1) nach mindestens einem der Ansprüche 1 bis 11, des Weiteren umfassend eines oder mehr als eines der folgenden Merkmale:
das empfangende oder übermittelnde Element (6) ist durch einen Rahmen oder eine Blende einer äußeren Oberfläche der Tür (5) verdeckt oder verborgen;
mindestens eines von dem mindestens einen empfangenden oder übermittelnden Element (6), der Empfänger- oder Sendeempfängereinheit (12), der elektronischen Verarbeitungseinheit, der Überwachungseinheit und der Anzeigevorrichtung ist mindestens eines von auf einem Bedruckungsbereich (11) der Tür (5) positioniert oder darin integriert.

13. Ofen (1) nach mindestens einem der Ansprüche 1 bis 12, wobei eine Montageposition von mindestens einem von dem mindestens einen empfangenden oder übermittelnden Element (6), der Empfänger- oder Sendeempfängereinheit (12), der elektronischen Signalverarbeitungseinheit und der Überwachungseinheit mindestens eine von einem doppelwandigen Segment der Tür (5) und einem doppelwandigen Segment eines Rahmens (17) der Tür (5), eines doppelwandigen Segments einer Türsäule (18), eines oberen oder unteren Rahmens der Tür (5) ist, wobei der Ofen (1) gegebenenfalls eines oder mehr als eines der folgenden Merkmale umfasst:
mindestens in einem Bereich, welcher die Montageposition umfasst, ist das doppelwandige Segment vorgesehen, um ein Kühlmedium, vorzugsweise Luft, hindurchzuführen, um mindestens eines von dem mindestens einen empfangenden oder übermittelnden Element (6), der Empfänger- oder Sendeempfängereinheit (12), der Signalverarbeitungseinheit und der Überwachungseinheit zu kühlen;
das doppelwandige Segment umfasst einen Ventilationskanal (20), der durch Kanalwände (21, 22) von der Montageposition getrennt ist;
die Temperaturbehandlungsvorrichtung (1) umfasst des Weiteren ein Ventilationssystem zum aktiven Ventilieren des Kühlmediums durch das doppelwandige Segment;
mindestens in eine Region, welche die Montageposition umfasst, ist ein gasförmiges, fließfähiges oder festes Medium zum passiven Kühlen von mindestens einem von dem mindestens einen empfangenden oder übermittelnden Element (6), der Empfänger- oder Sendeempfängereinheit (12), der Signalverarbeitungseinheit und der Überwachungseinheit eingeschlossen.

14. Ofen (1) nach mindestens einem der Ansprüche 1 bis 13, wobei die Substanz (2) mindestens eine von einem Nahrungsprodukt und einem Getränk ist, wobei die Temperaturbehandlung ausgewählt ist aus der Gruppe, die Kochen, Backen, Grillen, Bräunen, Rösten umfasst, jedoch nicht darauf begrenzt; und/oder
des Weiteren umfassend eine Temperaturbehandlungseinheit, die vorgesehen ist, um die Substanz (2) mittels mindestens einer bzw. einem von Wärmestrahlung, Wärmekonvektion, Wasserdampf, Mikrowelle bis zu elektromagnetischen Petahertz-Feldern und Magnetfeldern zu erhitzen.

## Revendications

1. Four (1), en particulier four de cuisson ou four à micro-ondes, comprenant :
une enceinte de four (3) pour un traitement thermique actif d'une substance (2), et adaptée pour recevoir dans celle-ci la substance (2) par l'intermédiaire d'une ouverture de compartiment (4) ;
une porte (5) conçue pour libérer et fermer l'ouverture de compartiment (4) dans une première et une deuxième position, respectivement ; et
au moins un élément de réception ou d'émission/réception (6) permettant au moins une communication sans fil unidirectionnelle (8) de signaux en provenance et/ou à destination d'au moins une unité de capteur (7) qui est placée au niveau ou à l'intérieur de l'enceinte de four (3) ;
**caractérisé en ce que** ledit au moins un élément de réception ou d'émission/réception (6) est positionné dans un espace intermédiaire entre deux parois et/ou panneaux de la porte (5), l'élément de réception ou d'émission/réception (6) étant prévu près d'un bord d'une vitre de verre (10) de la porte (5), et l'élément de réception ou d'émission/réception (6) étant protégé par une impression de porte (11) de la porte (5), et ladite impression de porte (11) étant située sur un côté de bordure de la porte (5).

2. Four (1) selon la revendication 1, dans lequel l'espace intermédiaire est confiné entre deux parois et/ou panneaux extérieurs et/ou intérieurs, en particulier entre une paroi et/ou un panneau extérieur et intérieur de la porte (5), les panneaux étant en option mis en œuvre sous forme de panneaux en verre, et l'espace intermédiaire étant en option mis en œuvre sous la forme d'une cavité d'espace intermédiaire de l'intérieur de la porte (5).

3. Four (1) selon au moins l'une des revendications 1 et 2, dans lequel ledit au moins un élément de réception ou d'émission/réception est positionné sur une surface de la paroi et/ou du panneau, la surface étant l'une d'une surface extérieure détournée du compartiment dans la deuxième position de la porte, et d'une surface tournée vers un espace intermédiaire entre deux parois de la porte (5).

4. Four (1) selon au moins l'une des revendications 1 à 3, dans lequel l'espace intermédiaire est situé dans une section verticale de l'encadrement de porte (18), en particulier un montant de porte (18) de la porte (5) ou une section d'encadrement inférieure de la porte (5).

5. Four (1) selon au moins l'une des revendications 1 à 4, comprenant en outre les particularités suivantes :
la communication sans fil (8) comprend une transmission bidirectionnelle de signaux en provenance et à destination de ladite au moins une unité de capteur (7), dans lequel :
ledit au moins un paramètre est en option sélectionné dans le groupe comprenant la température, l'humidité, la pression, la densité, le poids des aliments, et/ou
la température est en option au moins l'une d'une température de surface de la substance (2), d'une température intérieure de la substance (2) et d'une température de compartiment.

6. Four (1) selon au moins l'une des revendications 1 à 5, dans lequel :
la communication sans fil (8) est menée sur la base d'ondes électromagnétiques, les ondes électromagnétiques étant en option des ondes électromagnétiques ayant des fréquences allant des fréquences radio aux fréquences pétahertz, en particulier des ondes radio, des micro-ondes, de la lumière infrarouge et/ou visible et/ou des ondes acoustiques.

7. Four (1) selon au moins l'une des revendications 1 à 6, comprenant une ou plus d'une des particularités suivantes :
ledit au moins un élément de réception ou d'émission/réception (6) est une antenne, de préférence une antenne câblée, conçue pour la communication de signaux d'ondes électromagnétiques ;
l'élément ou un élément de réception ou d'émission/réception (6) comprend au moins un élément parmi un fil électriquement conducteur, une bande électriquement conductrice, un ruban ou un toron, de préférence de type fil métallique, une métallisation et un revêtement électriquement conducteur ;
l'élément ou un élément de réception ou d'émission/réception (6) comprend au moins une section linéaire, ladite au moins une section linéaire étant orientée en parallèle à au moins un côté de la porte (5), ledit au moins un côté étant un grand côté et/ou un petit côté ;
l'élément ou au moins un élément de l'au moins un ou d'au moins un élément de réception ou d'émission/réception (6) comprend au moins une section courbée aboutissant à au moins l'une d'une configuration de type anse, de type plaque, de type méandre et enroulée dudit au moins un élément de réception ou d'émission/réception (6).

8. Four (1) selon au moins l'une des revendications 1 à 7, le four (1) comprenant en outre une unité d'alimentation électrique adaptée pour une alimentation électrique sans fil de ladite au moins une unité de capteur (7), de préférence par l'intermédiaire d'au moins l'un dudit au moins un élément de réception ou d'émission/réception (6).

9. Four (1) selon au moins l'une des revendications 1 à 8, comprenant en outre une ou plus d'une des particularités suivantes :
ledit au moins un élément de réception ou d'émission/réception (6) est connecté à une unité électronique de réception ou d'émission/réception (12), l'unité de réception ou d'émission/réception (12) étant en option positionnée à distance dudit au moins un élément de réception ou d'émission/réception (6) sur ou dans un corps (12) ou un encadrement du dispositif de traitement thermique (1) ;
au moins un élément parmi une charnière de porte (14) de la porte (5), une section de contact (16) sur la porte (5) et une section de contact homologue (16) sur un encadrement du dispositif de traitement thermique (1), une section de prise sur la porte (5) et une section de prise homologue sur un encadrement du dispositif de traitement thermique (1), une ou plusieurs brides, et un ou plusieurs ressorts est/sont utilisé(s) pour établir un contact entre ledit au moins un élément de réception ou d'émission/réception (6) et l'unité de réception ou d'émission/réception (12), au moins dans la deuxième position de la porte (5).

10. Four (1) selon au moins l'une des revendications 1 à 9, comprenant en outre une unité de traitement de signal électronique, adaptée pour appliquer un traitement de signal aux signaux, le four (1) comprenant en outre en option une ou plusieurs des particularités suivantes :
l'unité de réception ou d'émission/réception (12) et l'unité de traitement de signal électronique constituent un composant électronique unique (12) ou l'unité de réception ou d'émission/réception (12) et l'unité de traitement électronique sont fournies comme des composants séparés ;
l'unité de traitement électronique est positionnée à distance de l'unité de réception ou d'émission/réception (12), dans un corps (13) ou sur un encadrement intérieur du dispositif de traitement thermique (1) ;
au moins un élément parmi une charnière de porte (14) de la porte (5), une section de contact (15) sur la porte (5) et une section de contact homologue (16) sur un encadrement du dispositif de traitement thermique (1), une section de prise sur la porte (5) et une section de prise homologue sur un encadrement du dispositif de traitement thermique (1), une ou plusieurs brides et un ou plusieurs ressorts est/sont utilisé(s) pour établir un contact entre l'unité de traitement électronique et l'unité de réception ou d'émission/réception (12), au moins dans la deuxième position de la porte (5).

11. Four (1) selon la revendication 10, le four comprenant un ou plus d'un des éléments suivants :
une unité de surveillance, de préférence intégrée dans l'unité de traitement électronique, adaptée pour surveiller ledit au moins un paramètre pendant un traitement thermique de la substance (2), l'unité de surveillance étant en option en outre adaptée pour commander automatiquement le déroulement du traitement thermique, sur la base d'une valeur réelle dudit au moins un paramètre et/ou d'un développement dans le temps dudit au moins un paramètre ;
un dispositif d'affichage adapté pour visualiser une valeur actuelle et/ou une évolution temporelle d'au moins un dudit au moins un paramètre, le dispositif d'affichage étant en option monté sur ou intégré dans une surface extérieure de la porte (5) et/ou monté sur ou intégré dans une surface extérieure d'un corps (13) du four (1).

12. Four (1) selon au moins l'une des revendications 1 à 11, comprenant en outre une ou plus d'une des particularités suivantes :
l'élément de réception ou d'émission/réception (6) est couvert et masqué par un encadrement ou une façade d'une surface extérieure de la porte (5) ;
au moins l'un dudit au moins un élément de réception ou d'émission/réception (6), de l'unité de réception ou d'émission/réception (12), de l'unité de traitement électronique, de l'unité de surveillance et du dispositif d'affichage est positionné sur et/ou intégré dans une zone d'impression (11) de la porte (5).

13. Four (1) selon au moins l'une des revendications 1 à 12, dans lequel une position de montage d'au moins dudit au moins un élément de réception ou d'émission/réception (6), de l'unité de réception ou d'émission/réception (12), de l'unité de traitement de signal électronique et de l'unité de surveillance est au moins un élément parmi une section à double paroi de la porte (5) et une section à double paroi d'un encadrement (17) de la porte (5), une section à double paroi d'un montant de porte (18), d'un encadrement supérieur ou inférieur de la porte (5), le four (1) comprenant en option une ou plus d'une des particularités suivantes :
au moins dans une zone comprenant la position de montage, la section à double paroi est adaptée pour faire passer un agent réfrigérant, de préférence de l'air, pour refroidir au moins l'un dudit au moins un élément de réception ou d'émission/réception (6), de l'unité de réception ou d'émission/réception (12), de l'unité de traitement de signal et de l'unité de surveillance ;
la section à double paroi comprend un canal de ventilation (20) séparé de la position de montage par des parois de canal (21, 22) ;
le dispositif de traitement thermique (1) comprend en outre un système de ventilation pour ventiler activement l'agent réfrigérant à travers la section à double paroi ;
au moins dans une région comprenant la position de montage, un agent gazeux, liquide ou solide est enfermé pour un refroidissement passif d'au moins l'un dudit au moins un élément de réception ou d'émission/réception (6), de l'unité de réception ou d'émission/réception (12), de l'unité de traitement de signal et de l'unité de surveillance.

14. Four (1) selon au moins l'une des revendications 1 à 13, dans lequel la substance (2) est un produit alimentaire et/ou une boisson, le traitement thermique étant sélectionné sans restriction dans le groupe comprenant la cuisson, la cuisson au four, la cuisson sur le gril, le brunissement, le rôtissage ; et/ou
comprenant en outre une unité de traitement thermique adaptée pour chauffer la substance (2) par l'intermédiaire d'au moins un élément parmi le rayonnement thermique, la convection thermique, la vapeur, la cuisson aux micro-ondes jusqu'à des champs électromagnétiques et des champs magnétiques de pétahertz.
